# EUROPÄISCHE PATENTSCHRIFT

(11) **EP 4 077 224 B1**
(45) Veröffentlichungstag und Bekanntmachung des Hinweises auf die Patenterteilung: **14.05.2025**
(21) Anmeldenummer: 20838064.2
(22) Anmeldetag: 18.12.2020
(51) Int. Cl.: C02F 1/72, C02F 3/34, C02F 11/00, C02F 11/02, C02F 11/145, C02F 101/10, C02F 101/30, C02F 103/00

(54) **VERFAHREN ZUR AUFBEREITUNG VON WÄSSERN, SEDIMENTEN UND/ODER SCHLÄMMEN**
METHODS FOR TREATMENT OF WATER, SEDIMENTS AND / OR SLUDGE
PROCÉDÉ DE TRAITEMENT DE L'EAU, DES SÉDIMENTS ET / OU DU LISIER

(30) Priorität: 13.01.2020 EP 20151430
(43) Veröffentlichungstag der Anmeldung: 26.10.2022
(73) Patentinhaber: OASE GmbH, 48477 Hörstel-Riesenbeck (DE)
(72) Erfinder: MUCK, Thorsten, 49479 Ibbenbüren (DE)
(74) Vertreter: Isarpatent
(86) Internationale Anmeldenummer: PCT/EP2020/087301
(87) Internationale Veröffentlichungsnummer: WO 2021/144121

(56) Entgegenhaltungen:
- DE-A1- 19 851 345
- US-A1- 2003 189 187
- MÜLLER HUBERT ET AL: "Groundwater cable bacteria conserve energy by sulfur disproportionation", THE I S M E JOURNAL: MULTIDISCIPLINARY JOURNAL OF MICROBIAL ECOLOGY, NATURE PUBLISHING GROUP, UNITED KINGDOM, vol. 14, no. 2, 14 November 2019 (2019-11-14), pages 623 - 634, XP036994435, ISSN: 1751-7362, [retrieved on 20191114], DOI: 10.1038/S41396-019-0554-1
- SULU-GAMBARI FATIMAH ET AL: "Cable Bacteria Control Iron-Phosphorus Dynamics in Sediments of a Coastal Hypoxic Basin", ENVIRONMENTAL SCIENCE & TECHNOLOGY, vol. 50, no. 3, 14 January 2016 (2016-01-14), US, pages 1227 - 1233, XP055782041, ISSN: 0013-936X, Retrieved from the Internet <URL:https://pubs.acs.org/doi/pdf/10.1021/acs.est.5b04369> [retrieved on 20210304], DOI: 10.1021/acs.est.5b04369

## Beschreibung

Die vorliegende Erfindung betrifft Verfahren zur Aufbereitung von Wässern, Sedimenten und/oder Schlämmen unter Verwendung von Erdalkaliperoxid, insbesondere Calciumperoxid, und Kabelbakterien, ein Kit umfassend eine Zusammensetzung umfassend mindestens ein Erdalkaliperoxid, und Kabelbakterien, sowie Verwendungen einer Zusammensetzung umfassend mindestens ein Erdalkaliperoxid, insbesondere in Verbindung mit Kabelbakterien.

In Folge hoher Phosphorbelastung (Eutrophierung) bildet sich in Seen und Gewässern beschleunigt Schlamm aus partikulärem organischem Material (POM) wie abgestorbenen Algen und Pflanzenteilen, die nicht vollständig mineralisiert sind.

Die Akkumulation von organischem Material verursacht eine starke Sauerstoffzehrung. Bis über die Oberkante der Sedimentschicht ist auch überstehendes Wasser bereits sauerstofffrei. In den darunter liegenden Sedimentschichten erfolgt eine anaerobe Mineralisation der organischen Substanz, wobei andere anorganische, oxidierte Substrate als Elektronenakzeptor dienen. Nach dem Kompetitionsprinzip dominieren die Mikroorganismen, die den Elektronenakzeptor mit dem höchsten Redoxpotential verwerten können. Unter diesen Umständen erfolgt die sequentielle Reduktion in der Reihenfolge Nitrat, Mangan-IV-Oxid, Eisen-III-Oxid und Sulfat. In Abwesenheit dieser Substrate wird org. Material durch Acetogenese und Methanogenese abgebaut.

Die bereits sauerstofffreie Wasserschicht über der Sedimentoberkante, schirmt die Mikroorganismen, die Sauerstoff verwenden können, geradezu ab. Die Stoffkreisläufe sind dadurch unnatürlich verkürzt. Die Verkürzung der Mineralisation in Gewässern ist Bestandteil des "Teufelskreises" der Eutrophierung.

Durch die zunehmendes Verschlammung verringert sich das Wasservolumen im Gewässer und die Lebensräume werden nicht nur physisch kleiner, sondern die chemischphysikalischen Folgen verkleinern den Lebensraum für Fische, Makrozoobenthos und Plankton. Die Artenzahlen nehmen ab, sowie auch die Dichte an Organismen. Das im Sediment entstehende Sulfid ist zudem phytotoxisch, sodass auch Wasserpflanzen sich nicht mehr entwickeln können.

Die Verschlammung der Gewässer ist ein globales Problem und führt zu vielfältigen Nutzungseinschränkung, sowie zu einer verstärkten Freisetzung von klimaschädlichem Methan aus Gewässersedimenten.

Im Zuge dieser Eutrophierungserscheinungen und -Folgen können die Seen und Gewässer kippen, sodass eine Behandlung der Seen und Gewässer notwendig wird.

Aus EP 1080042 A1 ist beispielsweise die Verwendung von Calciumperoxid (CaO₂) zur Schlammbehandlung bekannt. Insbesondere die Bindung von o-Phosphat und Schwermetallen, sowie die Erhöhung der Enzymaktivität von Bakterien, wurden dort beschrieben. Auch ist die Aufbereitung von Wässern und Abwässern in der DE 198 51 345 A1 offenbart. Die US 2003/189187 A1 betrifft eine Verbindung zum Freisetzen von gelöstem Sauerstoff.

Der Vorteil von Calciumperoxid besteht u.a. auch darin, dass die Hydrolyse ca. 7-8 Wochen andauern kann, wobei gleichförmig molekularer Sauerstoff an die Umgebung abgegeben wird, der von heterotrophen Bakterien in situ zum Abbau von organischem Material genutzt werden kann.

Die dadurch umsetzbare organische Masse steht dabei in einem quantitativen Verhältnis zur freigesetzten Masse an Sauerstoff. Während die Sauerstoffverfügbarkeit aus der Masse an Calciumperoxid berechenbar ist (Gl.1), lässt sich auch der Sauerstoffbedarf zur Mineralisation der "durchschnittlichen Biomasse Zusammensetzung" [Uhlmann & Horn 2001] nach Gl. 2 ermitteln.

CaO₂ + 2 H₂O → 2 Ca(OH)₂ + O₂ (Gl.1)

C₁₀₆H₁₈₀O₄₅N₁₆P + 118,5 O₂ → 106 CO₂ + 66 H₂O + 16 NH₃ + PO₄³⁻ + Energie (Gl.2)

Demnach werden 1,56 g Sauerstoff je Gramm organischen Materials für die Mineralisation benötigt. Um 1 % des Trockenrückstands eines Schlammes mit einem Trockenrückstand von z.B. 0,045 g/cm³ auf 1 cm Tiefe zu oxidieren, sind je Quadratmeter 7,0 g Sauerstoff erforderlich. Dazu müssen 49 g reines Calciumperoxid je m² angewendet werden.

Bei stark verschlammten Gewässern mit beispielsweise einem organischen Anteil zwischen 10 und 40 % der Trockenmasse sind daher erhebliche Aufwandsmengen anzuwenden.

Bei hohen Schlammstärken wird das Calciumperoxid zudem üblicherweise als Suspension mit Lanzen in das Sediment ausgebracht, um eine Wirkung innerhalb der Schicht zu erzielen.

Das ist bei großen Sedimentflächen mit großem Aufwand verbunden, da das Calciumperoxid nicht wasserlöslich ist, und für eine gute Verteilung ist dazu mindestens jeweils eine Injektion je m² Fläche erforderlich.

Es hat sich als förderlich erwiesen, dem CaO₂ heterotrophe Mikroorganismen hinzuzufügen, um eine rasche Verwendung des freigesetzten Sauerstoffes im zeitlich knappen Wirkzeitraum von 8 Wochen zu ermöglichen. Diese Mikroorganismen werden direkt an der Grenzfläche zwischen dem CaO₂ und dem Sediment aktiv. Das heißt, es entsteht eine Wirkfläche, die bei Applikationen ohne Injektion oben von der CaO₂ Auflage begrenzt wird. Dabei wird freigesetzter Sauerstoff auch an den Wasserkörper abgegeben, da in diese Richtung eine freie Diffusion möglich ist. Kabelbakterien zur Schwefeldisproportionierung in seichten Sedimenten sind in H. Müller et al., The ISME Journal 2020, 14, 23-634 beschrieben. Ergebnisse von Untersuchungen an Kabelbakterien zur Kontrolle der Eisen-Phosphor-Dynamik in Sedimenten von hypoxischen Küstengewässer sind zudem in F. Sulu-Gambari et al., Environmental Science & Technology 2016, 50, 1227-1233 gezeigt.

Es besteht somit ein Bedarf an Verfahren zur verbesserten Behandlung von Gewässern, Sedimenten und Schlämmen mit starkem Schlammanteil und/oder suboxischen oder sogar anoxischen Bereichen.

Es wurde überraschend gefunden, dass sich die Wirksamkeit der Anwendung von CaO₂ sprunghaft steigern lässt, wenn die Applikation derart ausgelegt wird, dass ein Milieu entsteht, in dem man die sogenannten Kabelbakterien etabliert.

Ein erster Aspekt der vorliegenden Erfindung betrifft ein Verfahren zur Aufbereitung von Wässern, wie stehenden und fließenden Wässern und Abwässern; Sedimenten und/oder Schlämmen, insbesondere von Sedimenten und/oder Schlämmen in Gewässern, umfassend:
(a) Einbringen und/oder Aufbringen einer Zusammensetzung umfassend mindestens ein Erdalkaliperoxid in und/oder auf die Wässer, Sedimente und/oder Schlämme; und
(b) Einbringen von Kabelbakterien in die Wässer, Sedimente und/oder Schlämme.

In einem zweiten Aspekt ist ein Verfahren zur Aufbereitung von Wässern, Sedimenten und/oder Schlämmen, insbesondere von Sedimenten und/oder Schlämmen in Gewässern, offenbart, umfassend:
(i) Untersuchen der Wässer, Sedimente und/oder Schlämme auf die Anwesenheit von Kabelbakterien; und
(ii-a) Einbringen und/oder Aufbringen einer Zusammensetzung umfassend mindestens ein Erdalkaliperoxid in und/oder auf die Wässer, Sedimente und/oder Schlämme, und
ein Einbringen von Kabelbakterien in die Wässer, Sedimente und/oder Schlämme, wenn bei der Untersuchung der Wässer, Sedimente und/oder Schlämme keine oder im Wesentlichen keine Kabelbakterien gefunden wurden; oder
(ii-b) Einbringen und/oder Aufbringen einer Zusammensetzung umfassend mindestens ein Erdalkaliperoxid in und/oder auf die Wässer, Sedimente und/oder Schlämme, wenn bei der Untersuchung der Wässer, Sedimente und/oder Schlämme Kabelbakterien gefunden wurden. Dabei kann gemäß bestimmten Ausführungsformen bei geringer Dichte von Kabelbakterien (z.B. < 10¹ Zellen/cm²) zunächst eine geringe Dosis an Calciumperoxid ausgebracht werden, um eine In Situ Vorkultur zu entwickeln, bevor, beispielsweise frühestens 2 Monate später, eine zweite Ausbringung erfolgt.

Zudem betrifft die vorliegende Erfindung ein Kit, umfassend eine Zusammensetzung umfassend mindestens ein Erdalkaliperoxid, und Kabelbakterien, sowie die Verwendung einer Zusammensetzung umfassend mindestens ein Erdalkaliperoxid in Verbindung mit Kabelbakterien zur Aufbereitung von Wässern, Sedimenten und/oder Schlämmen, insbesondere von Sedimenten und/oder Schlämmen in Gewässern.

Offenbart sind zudem die Verwendung einer Zusammensetzung umfassend mindestens ein Erdalkaliperoxid in Verbindung mit Kabelbakterien zur Förderung der Entwicklung von Wasserpflanzen. die Verwendung einer Zusammensetzung umfassend mindestens ein Erdalkaliperoxid in Verbindung mit Kabelbakterien zur Gewässertherapie, die Verwendung einer Zusammensetzung umfassend mindestens ein Erdalkaliperoxid in Verbindung mit Kabelbakterien zum Schlammabbau und Wiederherstellung von Wasserspeicherkapazität, und die Verwendung einer Zusammensetzung umfassend mindestens ein Erdalkaliperoxid in Verbindung mit Kabelbakterien zur Entgiftung einer Biozönose in einem Sediment und/oder im Schlamm, sowie die Verwendung von Erdalkaliperoxid, insbesondere Calciumperoxid, oder Mischungen umfassend Erdalkaliperoxid, insbesondere Calciumperoxid, als fester Elektronenakzeptor, zur temporären Herstellung einer Sedimentbiozönose einschließlich Kabelbakterien, beispielsweise wie sie in ungestörten Gewässern vorkommt.

Vorteilhafte Ausgestaltungen und Weiterbildungen ergeben sich aus den weiteren Unteransprüchen sowie aus der Beschreibung unter Bezugnahme auf die Figuren.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.
FIG. 1 zeigt schematisch ein beispielhaftes erfindungsgemäßes Verfahren gemäß dem ersten Aspekt.
FIG. 2 zeigt schematisch ein beispielhaftes erfindungsgemäßes Verfahren gemäß dem zweiten Aspekt.

### Definitionen

Zunächst sollen im Kontext der vorliegenden Patentanmeldung die folgenden Begriffe wie folgt verstanden werden:
So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Kabelbakterien sind vielzellige Bakterien, die kettenförmig aneinandergereiht sind und so lange kabelartige Aggregate bilden, die über Zentimeter-Distanzen einen Elektronentransport bewerkstelligen. Sie gehören zu der Deltaproteobakterienfamilie Desulfobulbaceae, die dafür bekannt sind, dass sie sulfatreduzierende oder schwefeldisproportionierende Arten umfassen. Kabelbakterien bilden nach ihrer 16S rRNA nach derzeitigem Stand zwei Gattungen, "Candidatus Electrothrix" und "Cancidatus Electronema". Mit einem "anodischen Ende" tief im Sediment und einem "kathodischen Ende" an der Phasengrenze mit Elektronenakzeptoren können sie suboxische Zonen überbrücken und in der anoxischen Zone beispielsweise Sulfid zu Sulfat oxidieren. Am "kathodischen Ende" (fungierend als Kathode) wird beispielsweise Sauerstoff reduziert, was dort zu einem pH-Wert Anstieg führt. Die Kabelbakterien ermöglichen hierbei einen Elektronentransport über lange Distanzen. Bedeutsam ist, dass diese Kabelbakterien üblicherweise nicht stabil genug sind, um aus der Sedimentoberfläche heraus zu wachsen, um an den im Wasser gelösten Sauerstoff heran zu kommen. In den stark reduzierenden Sedimenten eutropher Gewässer können Kabelbakterien demnach nicht arbeiten. Durch ihren Elektronentransport überbrücken sie räumlich das Vorkommen von Substrat und Elektronenakzeptor. Damit sind sie anderen Organsimen, die nur direkt an der Grenzschicht der Redoxpotentiale stoffwechseln können, deutlich überlegen. Kabelbakterien können in den eutrophierungsbeding verschlammten Gewässern demnach natürlich nicht "arbeiten", da dort der Sauerstoff als Elektronenakzeptor nicht in die obere Sedimentschicht gelangt. Mit Hilfe von Calciumperoxid können diese generell natürlichen Organismen das bekannte Kompetitionsprinzip, das auf der Basis der jeweils höchsten Redoxpotentiale der jeweiligen Elektronenakzeptoren beruht, ausschalten; Kabelbakterien schließen sich direkt mit dem jeweils höchsten vorhandenen Redoxpotential kurz und umgehen so den mikrobiologischen Wettbewerb mit Mikroorganismen, die auf den Stoffumsatz an / in der Phasengrenze beschränkt sind.

Die Oxidation von Sulfid beseitigt dessen phytotoxische Wirkung und ermöglicht submersen Wasserpflanzen somit deren Ansiedlung und Wachstum. Der Verlust der Makrophytenvegation an Gewässern ist nämlich eine bekannte und unliebsame Folge der Eutrophierung.

Ein weiterer Vorteil der Kabelbakterien ist, dass sie mobil sind und sich ausrichten können, beispielsweise in Schlämmen und/oder Sedimenten sowie sogar auf Partikeln, um so eine Redoxreaktion in verschiedenen Milieus durchführen zu können.

Kabelbakterien sind beispielsweise in K.U. Kjeldsen et al, "On the evolution and physiology of cable bacteria", PNAS, 2019, www.pnas.org/cgi/doifl073/pnas.1903514116, beschrieben, wobei auf diesen Artikel bezüglich der Kabelbakterien Bezug genommen wird und dessen Inhalt in Bezug auf Kabelbakterien hiermit durch Bezugnahme aufgenommen wird.

Unter Wässern werden im Sinne der vorliegenden Erfindung alle Wässer bzw. Gewässer verstanden, wie Teiche, Seen, Flüsse, Talsperren, küstennahe Gewässer, Fjorde, Brackwasserseen, Meeresbuchten, Seewasser, Aufzuchtstationen für Fische und andere Seetiere, Wasser in Speichersystemen für die Landwirtschaft oder Trinkwasserreservoire sowie Grundwasserleiter, wobei die voranstehenden Wässer auch Böden, Sedimente und/oder Schlämme sowie Sink-und Schwebstoffe enthalten können. Unter Sedimenten werden im Sinne der vorliegenden Erfindung in Wässern befindliche Festkörper, wie z. B. in Teichen, Seen und Flüssen, verstanden. Die Schlämme können beispielsweise aus Kläranlagen, Abwasserfilter etc. stammen und/oder sich am Boden von Wässern befinden. Bevorzugte Wässer sind Süßwässer mit Sedimenten und/oder Schlammablagerungen, wie etwa Teiche, Seen, etc., welche suboxische und/oder anoxische Zonen aufweisen und schnell kippen können, welche jedoch mit den vorliegenden Verfahren effektiv behandelt werden können. Mengenangaben im Rahmen der vorliegenden Erfindung beziehen sich auf Gew.%, soweit nicht anderweitig angegeben oder aus dem Kontext ersichtlich ist.

Ein erster Aspekt der vorliegenden Erfindung betrifft ein Verfahren zur Aufbereitung von Wässern, wie stehenden und fließenden Wässern und Abwässern; Sedimenten und/oder Schlämmen, insbesondere von Sedimenten und/oder Schlämmen in Gewässern, umfassend:
(a) Einbringen und/oder Aufbringen einer Zusammensetzung umfassend mindestens ein Erdalkaliperoxid in und/oder auf die Wässer, Sedimente und/oder Schlämme; und
(b) Einbringen von Kabelbakterien in die Wässer, Sedimente und/oder Schlämme.

Ein zweiter Aspekt der vorliegenden Erfindung ist auf ein Verfahren zur Aufbereitung von Wässern, Sedimenten und/oder Schlämmen, insbesondere von Sedimenten und/oder Schlämmen in Gewässern, gerichtet, umfassend:
(i) Untersuchen der Wässer, Sedimente und/oder Schlämme auf die Anwesenheit von Kabelbakterien; und
(ii-a) Einbringen und/oder Aufbringen einer Zusammensetzung umfassend mindestens ein Erdalkaliperoxid in und/oder auf die Wässer, Sedimente und/oder Schlämme, und
ein Einbringen von Kabelbakterien in die Wässer, Sedimente und/oder Schlämme, wenn bei der Untersuchung der Wässer, Sedimente und/oder Schlämme keine oder im Wesentlichen keine Kabelbakterien gefunden wurden; oder
(ii-b) Einbringen und/oder Aufbringen einer Zusammensetzung umfassend mindestens ein Erdalkaliperoxid in und/oder auf die Wässer, Sedimente und/oder Schlämme, wenn bei der Untersuchung der Wässer, Sedimente und/oder Schlämme Kabelbakterien gefunden wurden.

Dabei kann im Verfahren des zweiten Aspekts gemäß bestimmten Ausführungsformen bei geringer Dichte von Kabelbakterien (z.B. < 10¹ Zellen/cm² oder < 100 Zellen/m²) zunächst eine geringe Dosis an Calciumperoxid ausgebracht werden, um eine In Situ Vorkultur zu entwickeln, bevor, beispielsweise frühestens 2 Monate, 3 Monate oder 4 Monate später, eine zweite Ausbringung erfolgt.

Im Verfahren des ersten und des zweiten Aspekts sind die Zusammensetzung umfassend mindestens ein Erdalkaliperoxid und die Kabelbakterien dieselben.

Das Einbringen der Kabelbakterien ist nicht besonders beschränkt. Beispielsweise können sie als Suspension mit Wasser als Lösungsmittel eingebracht werden. Da insbesondere bei ausreichenden Substratverhältnisse (O₂/S²⁻) die Kabelbakterien sich sehr gut vermehren können, sind die zur effektiven Animpfung erforderlichen Konzentrationen nicht sehr hoch; mit 10² bis 10⁵ Zellen/ml, reichen beispielsweise wenige Liter einer entsprechenden Vorkultur, z.B. 2, 3, 4, 5, 6, 7, 8, 9, oder 10 Liter oder mehr, für 10000 m² (1 ha) Wasserfläche bereits aus. Höhere Startkonzentrationen oder Mengen verkürzen die Etablierungsdauer. Die Kabelbakterien sind ebenfalls nicht besonders beschränkt, und können beispielsweise auf den Gewässertyp abgestimmt sein. Beispielsweise können sie aus einer Vorkultur bereitgestellt werden, die im Labor oder im Feld, auf einer Teilfläche oder Gesamtfläche des Gewässers kultiviert werden kann.

Im Verfahren des ersten Aspekts können die Schritte (a) und (b) voneinander unabhängig oder gleichzeitig durchgeführt werden, und Schritt (a) kann vor oder nach Schritt (b) durchgeführt werden. Gemäß bestimmten Ausführungsformen wird jedoch der Schritt (b) des Einbringens von Kabelbakterien vor Schritt (a) durchgeführt, sodass die Kabelbakterien sofort mit der Verwertung des durch das mindestens eine Erdalkaliperoxid, insbesondere Calciumperoxid, freigesetzten Sauerstoffs und/oder anderen dadurch bereitgestellten Elektronenakzeptoren, beispielsweise das Erdalkaliperoxid, z.B. Calciumperoxid, selbst, beginnen können. Ein zeitlicher Abstand zwischen Schritten (b) und (a) ist hierbei nicht besonders beschränkt, kann jedoch beispielsweise bis zu einer Woche, bevorzugt bis zu 3 Tage, 2 Tage, 1 Tage oder weniger, beispielsweise 12 h und weniger oder 8 h und weniger betragen. Gemäß bestimmten Ausführungsformen wird der Schritt (a) vor Schritt (b) durchgeführt, sodass bereits aus dem mindestens einen Erdalkaliperoxid, insbesondere Calciumperoxid, freigesetzter Sauerstoff und/oder andere dadurch bereitgestellte Elektronenakzeptoren, beispielsweise das Erdalkaliperoxid, z.B. Calciumperoxid, selbst, für die Kabelbakterien zur Verfügung steht. Ein zeitlicher Abstand zwischen Schritten (a) und (b) ist hierbei nicht besonders beschränkt, kann jedoch beispielsweise bis zu einer Woche, bevorzugt bis zu 3 Tage, 2 Tage, 1 Tage oder weniger, beispielsweise 12 h und weniger oder 8 h und weniger betragen.

Kabelbakterien bevorzugen ein eher pH-neutrales Milieu. Da unmittelbar nach der Ausbringung von Calciumperoxid der pH-Wert in der obersten Schicht temporär ansteigen kann, wird bevorzugt der pH-Wert an der Sedimentphasengrenze zu beobachtet, bis sich dieser auf Werte zwischen 8,7 und 7,4 normalisiert hat, beispielsweise bevor Kabelbakterien eingebracht werden.

Calciumperoxid kann als Produkt in, beispielsweise u.s., Zusammensetzungen so verarbeitet werden, dass mit der Einbringung kein erhöhter pH-Wert zu erwarten ist, was für die praktische Umsetzung der Erfindung vorteilhaft ist.

Die Zusammensetzung umfassend mindestens ein Erdalkaliperoxid und die Kabelbakterien werden bevorzugt jedoch an im Wesentlichen gleichen Stellen oder an derselben Stelle in die Wässer, Sedimente und/oder Schlämme eingebracht, um Diffusionsvorgänge zu minimieren und die Effizienz der Behandlung zu erhöhen. Hierbei zeigt sich insbesondere der Synergismus zwischen der Sauerstofffreisetzung des mindestens einen Erdalkaliperoxids, insbesondere Calciumperoxid, und/oder anderen von Erdalkaliperoxid, z.B. Calciumperoxid, abgeleiteten Elektronenakzeptoren, und dessen Verwendung durch die Kabelbakterien, welcher oben und nachfolgend detaillierter beschrieben ist.

Gemäß bestimmten Ausführungsformen werden die Kabelbakterien derart eingebracht, dass diese sich an ein abzubauendes Material wie Schlamm in einem Gewässer, Ablagerungen, Schlämme generell, Sedimente etc. anlagern können und somit eine Kontaktierung von suboxischen und/oder anoxischen Bereichen des abzubauenden Materials und des vom mindestens einen Erdalkaliperoxid, insbesondere Calciumperoxid, freigesetzten Sauerstoffs und/oder einem anderen davon abgeleiteten festen Elektronenakzeptor, beispielsweise das Erdalkaliperoxid, z.B. CaO₂, selbst, ermöglichen.

Auch im Schritt (ii-a) des Verfahrens des zweiten Aspekts können das Einbringen und/oder Aufbringen einer Zusammensetzung umfassend mindestens ein Erdalkaliperoxid in und/oder auf die Wässer, Sedimente und/oder Schlämme, und das Einbringen von Kabelbakterien in die Wässer, Sedimente und/oder Schlämme, wenn bei der Untersuchung der Wässer, Sedimente und/oder Schlämme keine oder im Wesentlichen keine Kabelbakterien gefunden wurden, gleichzeitig oder zeitversetzt erfolgen.

Gemäß bestimmten Ausführungsformen wird jedoch der Schritt des Einbringens von Kabelbakterien vor dem Schritt des Ein- und/oder Aufbringen der Zusammensetzung umfassend das mindestens eine Erdalkaliperoxid, insbesondere Calciumperoxid, durchgeführt, sodass die Kabelbakterien sofort mit der Verwertung des durch das das mindestens eine Erdalkaliperoxid, insbesondere Calciumperoxid, freigesetzten Sauerstoffs und/oder anderen dadurch bereitgestellten Elektronenakzeptoren, beispielsweise dem Erdalkaliperoxid, z.B. Calciumperoxid, selbst, beginnen können.

Ein zeitlicher Abstand zwischen den beiden Schritten (z.B. Einbringen der Kabelbakterien vor dem Ein- und/oder Aufbringen der Zusammensetzung umfassend das mindestens eine Erdalkaliperoxid, insbesondere Calciumperoxid) ist auch hierbei nicht besonders beschränkt, kann jedoch beispielsweise bis zu einer Woche, bevorzugt bis zu 3 Tage, 2 Tage, 1 Tage oder weniger, beispielsweise 12 h und weniger oder 8 h und weniger betragen. Gemäß bestimmten Ausführungsformen wird der Schritt des Ein- und/oder Aufbringens der Zusammensetzung umfassend das mindestens eine Erdalkaliperoxid, insbesondere Calciumperoxid, vor dem Schritt des Einbringens der Kabelbakterien durchgeführt, sodass bereits aus dem mindestens einen Erdalkaliperoxid, insbesondere Calciumperoxid, freigesetzter Sauerstoff und/oder andere dadurch bereitgestellten Elektronenakzeptoren, beispielsweise das Erdalkaliperoxid, z.B. Calciumperoxid, selbst für die Kabelbakterien zur Verfügung steht. Ein zeitlicher Abstand zwischen den beiden Schritten (z.B. Auf- und/oder Einbringen der Zusammensetzung umfassend das mindestens eine Erdalkaliperoxid, insbesondere Calciumperoxid, vor den Kabelbakterien) ist hierbei nicht besonders beschränkt, kann jedoch beispielsweise bis zu einer Woche, bevorzugt bis zu 3 Tage, 2 Tage, 1 Tage oder weniger, beispielsweise 12 h und weniger oder 8 h und weniger betragen.

Die Zusammensetzung umfassend mindestens ein Erdalkaliperoxid und die Kabelbakterien werden bevorzugt jedoch an im Wesentlichen gleichen Stellen oder an derselben Stelle in die Wässer, Sedimente und/oder Schlämme eingebracht, um Diffusionsvorgänge zu minimieren und die Effizienz der Behandlung zu erhöhen. Hierbei zeigt sich insbesondere der Synergismus zwischen der Sauerstofffreisetzung des mindestens einen Erdalkaliperoxids, insbesondere Calciumperoxid, und/oder anderer dadurch bereitgestellter Elektronenakzeptoren, beispielsweise das Erdalkaliperoxid, z.B. Calciumperoxid, selbst, und dessen Verwendung durch die Kabelbakterien, welcher oben und nachfolgend detaillierter beschrieben ist.

Gemäß bestimmten Ausführungsformen werden die Kabelbakterien derart eingebracht, dass diese sich an ein abzubauendes Material wie Schlamm in einem Gewässer, Ablagerungen, Schlämme generell, Sedimente, Partikel etc. anlagern können und somit eine Kontaktierung von suboxischen und/oder anoxischen Bereichen des abzubauenden Materials und des vom mindestens einen Erdalkaliperoxid, insbesondere Calciumperoxid, freigesetzten Sauerstoffs und/oder anderen dadurch bereitgestellten Elektronenakzeptoren, beispielsweise das Erdalkaliperoxid, z.B. Calciumperoxid, selbst, ermöglichen.

Das Ein- und/oder Aufbringen der Zusammensetzung umfassend das mindestens eine Erdalkaliperoxid, insbesondere Calciumperoxid, ist nicht besonders beschränkt. Gemäß bestimmten Ausführungsformen wird die Zusammensetzung umfassend mindestens ein Erdalkaliperoxid direkt, in fester Form oder als wässrige Aufschlämmung oder Lösung, per Hand oder durch geeignete Dosiersysteme in das Wasser, den Schlamm und/oder das Sediment eingebracht und/oder auf das Wasser, den Schlamm und/oder das Sediment aufgebracht. Dies ist einfach durchführbar und ermöglicht eine Verteilung, sodass innerhalb der Wässer, auf dem Schlamm und/oder dem Sediment annähernd gleiche Konzentrationen an Erdalkaliperoxid, insbesondere Calciumperoxid - auch über lange Zeiträume - verfügbar sind und eine optimale Funktion der Kabelbakterien gewährleisten können.

Die Zusammensetzung umfassend mindestens ein Erdalkaliperoxid umfasst gemäß bestimmten bevorzugten Ausführungsformen nur ein Erdalkaliperoxid, insbesondere Calciumperoxid. Gemäß bestimmten Ausführungsformen kann mehr als ein Erdalkaliperoxid in der Zusammensetzung enthalten sein.

Gemäß bestimmten Ausführungsformen liegt die Zusammensetzung umfassend mindestens ein Erdalkaliperoxid in fester Form und wird von dem zu behandelnden Wasser umströmt. Hierdurch kann durch das mindestens eine Erdalkaliperoxid, insbesondere durch Calciumperoxid, Sauerstoff über lange Zeiträume gleichmäßig freigesetzt werden, sodass längere Einbringungsintervalle möglich sind.

Gemäß bestimmten Ausführungsformen wird die Zusammensetzung umfassend mindestens ein Erdalkaliperoxid durch Zwangsmischer, Erdfräsen oder andere mechanische Dosiersysteme und/oder Verfahren in das Sediment und/oder den Schlamm eingearbeitet. Hierdurch können das Sediment und/oder der Schlamm aufgelockert und dessen bzw. deren Oberfläche für ein Andocken von Kabelbakterien vergrößert werden, wodurch ein effektiver Abbau erfolgen kann.

Im Verfahren des zweiten Aspekts ist das Untersuchen der Wässer, Sedimente und/oder Schlämme auf die Anwesenheit von Kabelbakterien nicht besonders beschränkt, wird jedoch vor den jeweiligen Schritten von Ein- und/oder Aufbringen durchgeführt, da dieses sich aufgrund der Untersuchungsergebnisse unterscheidet, sodass auf die Untersuchungsergebnisse üblicherweise gewartet wird. Das Untersuchen kann beispielsweise durch Entnahme einer Probe umfassend Feststoffe, z.B. Schwebstoffe, Schlämme, Sedimente und mikrobiologischer Untersuchung der Probe auf Kabelbakterien erfolgen, beispielsweise durch Untersuchung mit Kabelbakterien-spezifischen Markern, z.B. mit optischen Methoden wie bei FISH (fluorescence in situ hybridization), durch Gensequenzierung von in der Probe vorhandenen Genen oder Genomen, etc. Die mikrobiologische Untersuchung ist nicht besonders beschränkt und kann beispielsweise auch diverse Vorbereitungsschritte wie etwa Reinigungs- und/oder Konzentrierungsschritte umfassen.

Wenn im Verfahren des zweiten Aspekts Kabelbakterien in einer Probe gefunden werden, ist es nicht mehr erforderlich, das Kabelbakterien eingebracht werden, sodass Schritt (ii-b) durchgeführt wird. Werden jedoch im Wesentlichen keine, z.B. z.B. < 10¹ Zellen/cm² oder < 100 Zellen/m², oder keine Kabelbakterien gefunden, so sind diese ebenfalls einzubringen, und Schritt (ii-a) wird durchgeführt.

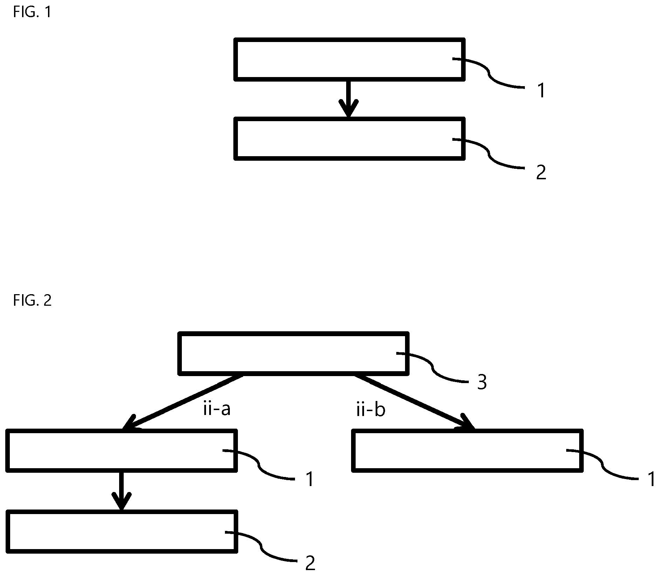

In Figur 1 und 2 sind schematisch die Verfahren des ersten und zweiten Aspekts gegenübergestellt.

Beim Verfahren des ersten Aspekts, das schematisch in Figur 1 gezeigt ist, wird hierbei keine Voruntersuchung gemacht, sodass ein schnelles Handeln möglich ist. Jedoch besteht auch die Möglichkeit, dass Kabelbakterien trotz Vorhandensein eingebracht werden, um die ausgebrachte Menge an CaO₂ im Wirkzeitraum besser auszunutzen. Bei Wässern, Sedimenten und/oder Schlämmen mit suboxischen oder insbesondere anoxischen Regionen kann jedoch solch eine schnelle Handlungsweise beispielsweise wünschenswert sein. Wie in Figur 1 beispielhaft gezeigt wird zunächst die Zusammensetzung umfassend das mindestens eine Erdalkaliperoxid, insbesondere Calciumperoxid, in Schritt 1 ein- und/oder aufgebracht, und dann werden in Schritt 2 die Kabelbakterien eingebracht. Selbstverständlich können die Schritte auch vertauscht sein oder gleichzeitig erfolgen, beispielsweise kann die Zusammensetzung umfassend das mindestens eine Erdalkaliperoxid, insbesondere Calciumperoxid, also auch die Kabelbakterien umfassen (sowohl im Verfahren des ersten Aspekts wie auch des zweiten Aspekts für Schritt ii-a).

Im in Figur 2 schematisch gezeigten Verfahren des zweien Aspekts erfolgt zunächst im Schritt 3 ein Untersuchen der Wässer, Sedimente und/oder Schlämme auf die Anwesenheit von Kabelbakterien. Bei fehlender oder geringer Anwesenheit von Kabelbakterien in der untersuchten Probe wird Schritt (ii-a) durchgeführt, wobei hier wie in Figur 1 die Zusammensetzung umfassend das mindestens eine Erdalkaliperoxid, insbesondere Calciumperoxid, in Schritt 1 ein- und/oder aufgebracht wird und die Kabelbakterien in Schritt 2 eingebracht werden, wobei auch hier die Schritte vertauscht sein können oder gleichzeitig erfolgen können.

Wenn jedoch Kabelbakterien, insbesondere in ausreichender Konzentration, z.B. ≥ 10¹ Zellen/cm² oder ≥ 100 Zellen/m², vorhanden sind, erfolgt nur in Schritt 1 ein Einbringen der Zusammensitzung umfassend das mindestens eine Erdalkaliperoxid, insbesondere Calciumperoxid, Kabelbakterien werden hier nicht eingebracht.

Geeignete Erdalkaliperoxide sind z. B. die Peroxide von Magnesium und Calcium, und deren Gemische, wobei Peroxide von Calcium und Magnesium oder deren Gemische bevorzugt eingesetzt werden. Besonders bevorzugt sind Calciumperoxide, wobei Calcium durch Magnesium in Mengenanteilen von 0,02 Gew.-% bis 50 Gew.-%, vorzugsweise bis 30 Gew.-%, bezogen auf CaO2, ersetzt werden kann. Insbesondere bevorzugt ist Calciumperoxid, welches über lange Zeiträume Sauerstoff freisetzen kann. In handelsüblichen Produkten liegt das Erdalkaliperoxid üblicherweise im Gemisch mit dem entsprechenden Carbonat und Hydroxid vor.

Gemäß bestimmten Ausführungsformen umfasst die Zusammensetzung umfassend mindestens ein Erdalkaliperoxid weiterhin mindestens ein Erdalkalicarbonat und/oder mindestens ein Erdalkalihydroxid und/oder ein Erdalkalisulfat. Beispielweise können neben Calciumperoxid Calciumcarbonat, Calciumhydroxid und/oder Magnesiumsulfat enthalten sein. Beispielhafte Zusammensetzungen mit solchen Bestandteilen sind beispielsweise IXPER^{®}75C von Solvay. Beispielhafte geeignete Zusammensetzungen umfassend Erdalkaliperoxid sind darüber hinaus SchlixX^{®} und SchlixX^{®} plus der Söll GmbH.

Gemäß bestimmten Ausführungsformen wird das mindestens eine Erdalkaliperoxid im Gemisch mit Alkalicarbonat-Peroxyhydrat eingesetzt. Von Alkalicarbonat-Peroxyhydraten ist beim Einsatz in Wasser bei einer Dosis von 5-20 g/m3 eine unmittelbar sauerstofferhöhende Wirkung bekannt, bei der noch keine biozide Wirkung auftritt. Die Alkalicarbonat-Peroxyhydrate sind Anlagerungsprodukte von Alkalicarbonaten mit H₂O₂, wie Me₂CO₃ x H₂O₂, beispielsweise 2 Me₂CO₃ · 3 H₂O₂ (Me = Alkalimetall, beispielsweise Na, K, Rb, Cs, insbesondere Na). Sie werden auch als Alkalipercarbonate bezeichnet und sind im Handel erhältlich. Aus ökonomisch wie auch ökologischer Sicht hat sich Natriumcarbonat-Peroxyhydrat als besonders geeignet erwiesen, um niedrige Sauerstoffgehalte im Wasserkörper umgehend zu erhöhen.

Gemäß bestimmten Ausführungsformen umfasst die Zusammensetzung umfassend mindestens ein Erdalkaliperoxid weiterhin mindestens ein Alkalicarbonat-Peroxyhydrat, insbesondere Na₂CO₃ x H₂O₂, vorzugsweise 2 Na₂CO₃ · 3 H₂O₂, oder ein Gemisch aus Na₂CO₃ und H₂O₂. Gemäß bestimmten Ausführungsformen umfassen die erfindungsgemäßen Verfahren weiter ein Einbringen und/oder Aufbringen von mindestens einem Alkalicarbonat-Peroxyhydrat, insbesondere Na₂CO₃ x H₂O₂, vorzugsweise 2 Na₂CO₃ · 3 H₂O₂, oder einem Gemisch aus Na₂CO₃ und H₂O₂.

Die Erdalkaliperoxide und Alkalicarbonat-Peroxyhydrate werden vorzugsweise in Mengenverhältnissen von 1 : 1 bis 1 : 0,03 eingesetzt.

Eine Steigerung der Phosphat-Fällung kann erreicht werden, wenn man dem zu behandelnden System Lanthanionen zusetzt. Diese Kombination ist besonders sinnvoll, wenn ohnehin auch eine Phosphatfällung zur Verringerung der Eutrophierung angezeigt ist. Lanthan in der aktiven Sedimentbarriere verringert den Phosphorausstrom aus dem Sediment, wenn es nach der CaO₂-Behandlung wieder reduzierend wird.

Zur Durchführung des erfindungsgemäßen Verfahrens werden die verwendeten Substanzen, d.h. Erdalkaliperoxide und ggf. Alkalicarbonat-Peroxyhydrate sowie weitere fakultative Bestandteile, gemäß bestimmten Ausführungsformen in einer Menge von 2 bis 700, bevorzugt 4 bis 500, insbesondere 5 bis 300, besonders bevorzugt 10 bis 150, g/m² Wasserfläche aufgebracht. Bei der Sediment- und/oder Schlammbehandlung kann wegen der üblicherweise höheren Menge an oxidierbaren Stoffen der Zusatz der erfindungsgemäß verwendeten Substanzen ein Vielfaches der Wässern zuzusetzenden Menge betragen. In diesen Fällen kann eine mehrmalige Anwendung erfolgen.

Mit dem neuen Verfahren ist es darüber hinaus möglich, Schwermetallgehalte sowie die Gehalte an störenden Anionen, z. B. NO₂⁻, S²⁻, NH₄⁺, etc., zu senken.

Da die so erfolgte Entgiftung des Porenwassers eine normale Entwicklung der übrigen Organismen der suboxischen und sauerstoffhaltigen Sedimentzonen erlaubt, tritt weiterhin als synergistische Wirkung eine Vitaliserung aller Sedimentzonen oberhalb des Wirkraumes der Kabelbakterien auf.

Das erfindungsgemäß eingesetzte mindestens eine Erdalkaliperoxid und weitere ggf. eingesetzte Komponenten können den zu behandelnden Systemen entweder als Einzelsubstanzen oder im Gemisch mit anderen in einem Festkörper, wässrige Lösungen oder Aufschlämmungen zugesetzt werden.

Als derartige Festkörper kommen insbesondere Silikate, wie Schichtsilikate oder Gerüstsilikate, vorzugsweise aus der Gruppe der Zeolithe und Bentonite, in Betracht. Aus anwendungstechnischen Gründen ist es besonders zweckmäßig, die in fester Form vorliegenden Materialien zu kompaktieren und z. B. als Granulate, Pellets oder Tabletten einzusetzen. Gemäß bestimmten Ausführungsformen umfasst die Zusammensetzung umfassend mindestens ein Erdalkaliperoxid daher weiterhin mindestens ein Silikat, wie Schichtsilikate oder Gerüstsilikate, vorzugsweise aus der Gruppe der Zeolithe und Bentonite.

In Abhängigkeit von der Wasserqualität und Sedimentqualität, wie Carbonatgehalt, pH-Wert, etc., kann es angebracht sein, noch weitere Verbindungen zuzusetzen, die die Wasser-bzw. Sedimentqualität erhöhen. Als solche Verbindungen können beispielsweise genannt werden Ca(OH)₂, CaO, CaCO₃, CaCl₂, Ca(NO₃)₂, CaSO₄, MgSO₄, Ca₂SiO₄, weitere analoge Magnesiumverbindungen, sowie Gemische der voranstehenden. Je nach Beschaffenheit des Rohwassers kann es erforderlich sein, das Wasser unter Verwendung von Alkalimetall- oder Erdalkalimetallsalzen, insbesondere Oxiden, Hydroxiden, Carbonaten und/oder Hydrogencarbonaten, zu behandeln, beispielsweise um den pH-Wert zu steuern.

Gemäß bestimmten Ausführungsformen werden die erfindungsgemäß eingesetzten Verbindungen in Kombination mit einem Gemisch aus CaCO₃, CaCl₂ und/oder Ca(NO₃)₂ und ggf. Magnesiumsalze, sowie NaHCO₃ und ggf. KHCO₃, wobei CaCO₃ und CaCl₂ und/oder Ca(NO₃)₂ sowie ggf. Magnesiumsalze in einem Stoffmengenverhältnis von 0,01 : 1 bis 2 : 1 und CaCl₂ und/oder Ca(NO₃)₂ sowie ggf. Magnesiumsalze und NaHCO₃ sowie ggf. KHCO₃ in einem Stoffmengenverhältnis von 1 : 3 bis 2 : 1 vorliegen. Eine solche Mischung und ihre Eignung zur Aufbereitung von Wässern und Sedimenten ist beispielsweise in der europäischen Patentanmeldung EP 737 169 beschrieben. Gemäß bestimmten Ausführungsformen wird die Zusammensetzung umfassend mindestens ein Erdalkaliperoxid weiterhin mit einem Gemisch aus CaCO₃, CaCl₂ und/oder Ca(NO₃)₂ und ggf. Magnesiumsalze, sowie NaHCO₃ und ggf. KHCO₃, wobei CaCO₃ und CaCl₂ und/oder Ca(NO₃)₂ sowie ggf. Magnesiumsalze in einem Stoffmengenverhältnis von 0,01 : 1 bis 2 : 1 und CaCl₂ und/oder Ca(NO₃)₂ sowie ggf. Magnesiumsalze und NaHCO₃ sowie ggf. KHCO₃ in einem Stoffmengenverhältnis von 1 : 3 bis 2 : 1 vorliegen, eingesetzt.

Die Gegenwart von Salzen, beispielsweise des Eisens und/oder Aluminiums, und/oder von Oxiden, Hydroxiden, Hydrogencarbonaten, Carbonaten, Sulfaten, Nitraten, Chlorid und/oder Fluorid kann die Wirksamkeit des Verfahrens fördern. Insbesondere durch die Dotierung der Metalle Eisen und/oder Aluminium und/oder Lanthan in Verbindungen, wobei diese Verbindungen in einer solchen Menge eingesetzt werden, dass die Wasserqualität nicht nachteilig beeinflusst wird, (abhängig beispielsweise von einer Voruntersuchung der Wasserqualität) kann die Wirksamkeit verbessert werden. Gemäß bestimmten Ausführungsformen werden also zusätzlich Eisen- und/oder Aluminiumionen, und/oder Lanthanionen, beispielsweise auch in der Zusammensetzung umfassend mindestens ein Erdalkaliperoxid, eingebracht.

Die erfindungsgemäßen Verfahren können eingesetzt werden zur Aufbereitung von Gewässersedimenten, Schlämmen und/oder Wasser/Abwasser in offenen und geschlossenen wasserhaltigen Systemen, Gewässern wie Meerwasser, Brackwasser und Süßwasser, z. B. in Talsperren, künstlichen oder natürlichen Seen, Bade-oder Fischereigewässern, Zierteichen und der Aquaristik, ferner in Prozesswässern, z.B. Kläranlagen, Abwasseraufbereitungsanlagen, Recyclinganlagen, Kühlwasseranlagen und Wärmetauscheranlagen, Abwässern chemischer Produktionsanlagen, oder bei der Behandlung von Wasser, das durch Zersetzungs- und Kondensationsprozesse (z.B. Deponiesickerwasser oder Kondensat aus thermischen Abfallverwertungsanlagen) oder durch Auslaugungsprozesse entsteht (z.B. Wasser das durch kontaminierte Böden, Gewässersedimente oder Schlämme sickert).

Die Durchführung der erfindungsgemäßen Verfahren kann erfolgen durch direkte Dosierung der Komponenten von Hand, und/oder durch technische Einrichtungen oder Hilfsmittel wie Dosiersysteme. Das Material kann direkt in das zu behandelnde Wasser, den Schlamm und/oder das Sediment dosiert werden, und/oder auch dadurch, dass Behältnisse das Material in fester Form enthalten und vom zu behandelnden Wasser durchströmt werden, wie zum Beispiel Filterpatronen, Fest- oder Wirbelbettreaktoren.

Weiterhin offenbart ist ein Kit, umfassend eine Zusammensetzung umfassend mindestens ein Erdalkaliperoxid, und Kabelbakterien.

Die Zusammensetzung umfassend mindestens ein Erdalkaliperoxid und die Kabelbakterien sind hierbei dieselben wie in den erfindungsgemäßen Verfahren, sodass hier auf die entsprechenden Passagen bei der Diskussion der erfindungsgemäßen Verfahren wird. Im Kit können die Zusammensetzung umfassend mindestens ein Erdalkaliperoxid und die Kabelbakterien getrennt vorliegen, oder die Kabelbakterien können in der Zusammensetzung umfassend mindestens ein Erdalkaliperoxid umfasst sein. Weitere mögliche Bestandteile des Kits sind oben im Zusammenhang mit den erfindungsgemäßen Verfahren genannt.

Das erfindungsgemäße Kit kann insbesondere in den erfindungsgemäßen Verfahren verwendet werden. Entsprechend ist auch eine solche Verwendung des Kits offenbart.

Zudem offenbart ist die Verwendung einer Zusammensetzung umfassend mindestens ein Erdalkaliperoxid in Verbindung mit Kabelbakterien zur Aufbereitung von Wässern, Sedimenten und/oder Schlämmen. Auch hier sind die Zusammensetzung umfassend mindestens ein Erdalkaliperoxid und die Kabelbakterien wie oben genannt in Verbindung mit den erfindungsgemäßen Verfahren, und auch hier können die Zusammensetzung umfassend mindestens ein Erdalkaliperoxid und die Kabelbakterien getrennt oder zusammen verwendet werden.

Offenbart ist weiterhin die Verwendung einer Zusammensetzung umfassend mindestens ein Erdalkaliperoxid in Verbindung mit Kabelbakterien zur Förderung der Entwicklung von Wasserpflanzen. Die Wasserpflanzen sind hierbei nicht besonders beschränkt, sind jedoch bevorzugt solche, welche in suboxischen oder anoxischen Umgebungen nicht gedeihen können.

Auch offenbart ist die Verwendung einer Zusammensetzung umfassend mindestens ein Erdalkaliperoxid in Verbindung mit Kabelbakterien zur Gewässertherapie.

Darüber hinaus betrifft die vorliegende Erfindung die Verwendung einer Zusammensetzung umfassend mindestens ein Erdalkaliperoxid in Verbindung mit Kabelbakterien zum Schlammabbau der Wiederherstellung von Wasserspeicherkapazität. Dies ist insbesondere für die genannten Gewässer von Bedeutung.

Auch offenbart ist die Verwendung einer Zusammensetzung umfassend mindestens ein Erdalkaliperoxid in Verbindung mit Kabelbakterien zur Entgiftung einer Biozönose in einem Sediment und/oder im Schlamm. Hierbei können die oben wie auch nachstehend beschriebenen Giftstoffe und schädlichen Milieus abgebaut werden.

Weiter offenbart ist die Verwendung von Erdalkaliperoxid, insbesondere Calciumperoxid, oder Mischungen umfassend Erdalkaliperoxid, insbesondere Calciumperoxid, als fester Elektronenakzeptor, zur temporären Herstellung einer Sedimentbiozönose einschließlich Kabelbakterien, beispielsweise wie sie in ungestörten Gewässern vorkommt. Es können also "künstliche" Biozönosen hergestellt oder eingebracht werden, welche dazu führen können, dass eine natürliche Umgebung in einem Gewässer, Schlamm, Sediment wiederhergestellt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiele

Fünf verschiedene Gewässer mit Gewässersedimenten wurden mit einer Zusammensetzung umfassend Calciumperoxid behandelt, wobei eine erhöhte Effektivität bei drei Gewässern beobachtet wurde. In den Sedimentproben der drei Gewässer wurden hierbei Kabelbakterien gefunden, wohingegen in den beiden anderen Gewässern keine Kabelbakterien gefunden wurden. Die Kabelbakterien wurden hierbei mit FISH mit spezifischen Fluoreszenzmarkern für die Kabelbakterien nachgewiesen.

Es wurde nachgewiesen, dass mit Kabelbakterien in Gewässersedimenten eine unerwartet hohe Abbauwirkung des CaO₂ zu registrieren ist. Im Kleinen Rußweiher in Eschenbach wurde beispielsweise CaO₂ auf 170 000 m² (17 ha) in geringer Dosis angewendet, nachdem in den Vorjahren eine höher Dosis keinen nennenswerten Effekt gezeigt hat. Mit 0,045 kg/m² (450 kg/ha) einer Zusammensetzung, die 0,15 kg CaO₂/m² (150 kg CaO₂/ha) Wasserfläche entsprach, wurde ein Schlammvolumen von 2.200 m³ Schlamm je 10000 m² (Hektar) abgebaut. Über einen Zeitraum von 5 Monaten wurden hierbei eine Schlammschicht von ca. 22 cm entfernt. Dabei zeigte sich, dass Phosphor bei dieser Maßnahme im verbleibenden Sediment vorwiegend an Eisen gebunden wurde. Überraschend wurde gefunden, dass die Masse an organischem Schlamm, die bei Anwesenheit von Kabelbakterien abgebaut wird, um eine Vielfaches höher ist, als nach der Stöchiometrie zu erwarten ist.

Es kommt also zu einer synergistisch verstärkten Ausbildung einer oberen Sedimentbarriere für Phosphor, durch aktive Mobilisierung von Fe²⁺, dass in Richtung Wasser/Sedimentgrenzfläche diffundiert und dort oder auf dem Weg dorthin zu Fe³⁺ oxidiert wird. Fe³⁺ ist ein natürlicher Bindungspartner für Phosphat. Hierbei ist zu vermuten, dass die Phosphorbarriere durch die Eisenionen erzeugt wird, welche beispielsweise aus den Sedimenten aus Eisensulfid oder Eisensulfit nach Oxidation durch die Kabelbakterien freigesetzt werden können. Hierbei machen sich die Kabelbakterien weiter den durch das Calciumperoxid eingebrachten Sauerstoff und/oder andere dadurch bereitgestellte Elektronenakzeptoren für die Redoxreaktion zu Nutze.

Die Zunahme an eisengebundenen Phosphaten im Sediment wurde durch Sedimentuntersuchungen belegt.

Ebenfalls wurde gefunden, dass bei den Gewässern mit Kabelbakterien nach der Calciumperoxidgabe nur anfänglich eine Zunahme von Sauerstoff oder sogar eine Abnahme der Sauerstoffkonzentration in der Wassersäule finden lässt Dieses Indiz spricht dafür ist, dass hier die Kabelbakterien den Sauerstoff auch aus der Wassersäule verwenden, nachdem die O₂-freie Wasserschicht über der Sedimentoberkante durch CaO₂ beseitigt worden ist. Normalerweise und ohne Kabelbakterien, ist eine Erhöhung der Sauerstoffkonzentration durch Diffusion gegeben. Die Projekte ohne Kabelbakterien wiesen dagegen einen Anstieg der O₂-Konzentration in der Wassersäule auf, was diffusionskontrolliert auch zu erwarten ist.

Die P-bindende Eigenschaft von CaO₂, gem. Patent EP 1080042 A1 spielt bei diesem Verfahren keine Rolle.

Zur Anwendung kamen Tabletten, weil sie punktgenau appliziert werden können, und/oder Granulate oder Pulver, die bevorzugt als Suspension dosiert werden, weil sich nur so eine gleichmäßige Verteilung unter Wasser realisieren lässt. Wichtig ist eine flächenproportionale Ausbringung.

Die Anwesenheit von Kabelbakterien führt typischerweise zu einer Zunahme des Wassergehaltes der behandelten Sedimente, einer Verringerung des organischen Anteils, der als Glühverlust oder TOC (total organic carbon; gesamter organischer Kohlenstoff) gemessen werden kann, zu einem erhöhten Eisen-P- Anteil in den P-Fraktionen des Sedimentes, und zu einem erhöhten Stofftransport von Sauerstoff aus dem Wasserkörper auf/in die Sedimentoberfläche hinein.

In behandelten Seen mit Kabelbakterien ist danach eine Zunahme der Makrophytenvegetation zu registrieren. Die Methode ist entsprechend geeignet, Wasserpflanzen in eutrophen Gewässern wieder anzusiedeln.

Das Kabelbakterium entgiftet (Sulfid) in erfindungsgemäßen Verfahren, was Makrophytenvegetation ermöglicht, es mobilisiert Fe-II, was zu einer P-Sperre unterhalb der CaO₂-Schicht führt, es umgeht das Kompetitionsprinzip und schaltet sich damit aus dem Wettbewerb um Elektronenakzeptoren aus. CaO₂ alleine hat eine begrenzte Wirkung, Kabelbakterien alleine kommen nicht an einen Elektronenakzeptor. Beides gleichzeitig wirkt in jede Richtung verstärkend.

## Patentansprüche

1. Verfahren zur Aufbereitung von Wässern, Sedimenten und/oder Schlämmen, umfassend:
(a) Einbringen und/oder Aufbringen einer Zusammensetzung umfassend mindestens ein Erdalkaliperoxid in und/oder auf die Wässer, Sedimente und/oder Schlämme; und
(b) Einbringen von Kabelbakterien in die Wässer, Sedimente und/oder Schlämme.

2. Verfahren zur Aufbereitung von Wässern, Sedimenten und/oder Schlämmen, umfassend:
(i) Untersuchen der Wässer, Sedimente und/oder Schlämme auf die Anwesenheit von Kabelbakterien; und
(ii-a) Einbringen und/oder Aufbringen einer Zusammensetzung umfassend mindestens ein Erdalkaliperoxid in und/oder auf die Wässer, Sedimente und/oder Schlämme, und
ein Einbringen von Kabelbakterien in die Wässer, Sedimente und/oder Schlämme, wenn bei der Untersuchung der Wässer, Sedimente und/oder Schlämme keine oder im Wesentlichen keine Kabelbakterien gefunden wurden; oder
(ii-b) Einbringen und/oder Aufbringen einer Zusammensetzung umfassend mindestens ein Erdalkaliperoxid in und/oder auf die Wässer, Sedimente und/oder Schlämme, wenn bei der Untersuchung der Wässer, Sedimente und/oder Schlämme Kabelbakterien gefunden wurden.

3. Verfahren nach Anspruch 1 oder 2, **dadurch gekennzeichnet, dass** als Erdalkaliperoxid ein Peroxid von Calcium, Magnesium oder eine Mischung davon eingesetzt wird.

4. Verfahren nach einem der vorgehenden Ansprüche, **dadurch gekennzeichnet, dass** die Zusammensetzung umfassend mindestens ein Erdalkaliperoxid weiterhin mindestens ein Erdalkalicarbonat und/oder mindestens ein Erdalkalihydroxid und/oder ein Erdalkalisulfat umfasst.

5. Verfahren nach einem der vorgehenden Ansprüche, **dadurch gekennzeichnet, dass** die Zusammensetzung umfassend mindestens ein Erdalkaliperoxid weiterhin mindestens ein Alkalicarbonat-Peroxyhydrat, insbesondere Na₂CO₃ x H₂O₂, vorzugsweise 2 Na₂CO₃ · 3 H₂O₂, oder ein Gemisch aus Na₂CO₃ und H₂O₂, umfasst, oder weiter umfassend ein Einbringen und/oder Aufbringen von mindestens einem Alkalicarbonat-Peroxyhydrat, insbesondere Na₂CO₃ x H₂O₂, vorzugsweise 2 Na₂CO₃ · 3 H₂O₂, oder einem Gemisch aus Na₂CO₃ und H₂O₂.

6. Verfahren nach einem der vorgehenden Ansprüche, **dadurch gekennzeichnet, dass** die Zusammensetzung umfassend mindestens ein Erdalkaliperoxid weiterhin mit einem Gemisch aus CaCO₃, CaCl₂ und/oder Ca(NO₃)₂ und ggf. Magnesiumsalze, sowie NaHCO₃ und ggf. KHCO₃, wobei CaCO₃ und CaCl₂ und/oder Ca(NO₃)₂ sowie ggf. Magnesiumsalze in einem Stoffmengenverhältnis von 0,01 : 1 bis 2 : 1 und CaCl₂ und/oder Ca(NO₃)₂ sowie ggf. Magnesiumsalze und NaHCO₃ sowie ggf. KHCO₃ in einem Stoffmengenverhältnis von 1 : 3 bis 2 : 1 vorliegen, eingesetzt wird.

7. Verfahren nach einem der vorgehenden Ansprüche, **dadurch gekennzeichnet, dass** die Zusammensetzung umfassend mindestens ein Erdalkaliperoxid weiterhin mindestens ein Silikat, wie Schichtsilikate oder Gerüstsilikate, vorzugsweise aus der Gruppe der Zeolithe und Bentonite, umfasst.

8. Verfahren nach einem der vorgehenden Ansprüche, **dadurch gekennzeichnet, dass** zusätzlich Eisen- und/oder Aluminiumionen, Fluoridionen und/oder Lanthanionen eingebracht und/ oder aufgebracht werden.

9. Verfahren nach einem der vorgehenden Ansprüche, **dadurch gekennzeichnet, dass** die Zusammensetzung umfassend mindestens ein Erdalkaliperoxid direkt, in fester Form oder als wässrige Aufschlämmung oder Lösung, per Hand oder durch geeignete Dosiersysteme in das Wasser, den Schlamm und/oder das Sediment eingebracht und/oder auf das Wasser, den Schlamm und/oder das Sediment aufgebracht werden, und/oder dass die Zusammensetzung umfassend mindestens ein Erdalkaliperoxid in fester Form vorliegt und von dem zu behandelnden Wasser umströmt werden.

10. Verfahren nach einem der vorgehenden Ansprüche, **dadurch gekennzeichnet, dass** die Zusammensetzung umfassend mindestens ein Erdalkaliperoxid durch Zwangsmischer, Erdfräsen oder andere mechanische Dosiersysteme und/oder Methoden in das Sediment und/oder den Schlamm eingearbeitet wird.

11. Kit, umfassend eine Zusammensetzung umfassend mindestens ein Erdalkaliperoxid, und Kabelbakterien.

12. Verwendung einer Zusammensetzung umfassend mindestens ein Erdalkaliperoxid in Verbindung mit Kabelbakterien zur Aufbereitung von Wässern, Sedimenten und/oder Schlämmen, insbesondere von Sedimenten und/oder Schlämmen in Gewässern.

13. Verwendung einer Zusammensetzung umfassend mindestens ein Erdalkaliperoxid in Verbindung mit Kabelbakterien zur Förderung der Entwicklung von Wasserpflanzen oder zur Gewässertherapie.

14. Verwendung einer Zusammensetzung umfassend mindestens ein Erdalkaliperoxid in Verbindung mit Kabelbakterien zum Schlammabbau und Wiederherstellung von Wasserspeicherkapazität oder zur Entgiftung einer Biozönose in einem Sediment und/oder im Schlamm.

15. Verwendung von Erdalkaliperoxid, insbesondere Calciumperoxid, oder Mischungen umfassend Erdalkaliperoxid, insbesondere Calciumperoxid, als fester Elektronenakzeptor, zur temporären Herstellung einer Sedimentbiozönose einschließlich Kabelbakterien, beispielsweise wie sie in ungestörten Gewässern vorkommt.

## Claims

1. A method for treating waters, sediments and/or sludges, comprising:
(a) introducing and/or applying a composition comprising at least one alkaline earth metal peroxide into and/or to the waters, sediments and/or sludges; and
(b) introducing cable bacteria into the waters, sediments and/or sludges.

2. A method for treating waters, sediments and/or sludges, comprising:
(i) testing the waters, sediments and/or sludges for the presence of cable bacteria; and
(ii-a) introducing and/or applying a composition comprising at least one alkaline earth metal peroxide into and/or to the waters, sediments and/or sludges, and
introducing cable bacteria into the waters, sediments and/or sludges if no or essentially no cable bacteria were found during the testing of the waters, sediments and/or sludges; or
(ii-b) introducing and/or applying a composition comprising at least one alkaline earth metal peroxide into and/or to the waters, sediments and/or sludges if cable bacteria were found during the testing of the waters, sediments and/or sludges.

3. The method as claimed in claim 1 or 2, **characterized in that** the alkaline earth metal peroxide used is a peroxide of calcium, a peroxide of magnesium or a mixture thereof.

4. The method as claimed in any of the preceding claims, **characterized in that** the composition comprising at least one alkaline earth metal peroxide additionally comprises at least one alkaline earth metal carbonate and/or at least one alkaline earth metal hydroxide and/or one alkaline earth metal sulfate.

5. The method as claimed in any of the preceding claims, **characterized in that** the composition comprising at least one alkaline earth metal peroxide additionally comprises at least one alkali metal carbonate peroxyhydrate, especially Na₂CO₃ x H₂O₂, preferably 2 Na₂CO₃ · 3 H₂O₂, or a mixture of Na₂CO₃ and H₂O₂, or further comprising introducing and/or applying at least one alkali metal carbonate peroxyhydrate, especially Na₂CO₃ x H₂O₂, preferably 2 Na₂CO₃ · 3 H₂O₂, or a mixture of Na₂CO₃ and H₂O₂.

6. The method as claimed in any of the preceding claims, **characterized in that** the composition comprising at least one alkaline earth metal peroxide is additionally used with a mixture of CaCO₃, CaCl₂ and/or Ca(NO₃)₂ and optionally magnesium salts, and NaHCO₃ and optionally KHCO₃, wherein CaCO₃ and CaCl₂ and/or Ca(NO₃)₂ and optionally magnesium salts are present in a molar ratio of 0.01:1 to 2:1 and CaCl₂ and/or Ca(NO₃)₂ and optionally magnesium salts and NaHCO₃ and optionally KHCO₃ are present in a molar ratio of 1:3 to 2:1.

7. The method as claimed in any of the preceding claims, **characterized in that** the composition comprising at least one alkaline earth metal peroxide additionally comprises at least one silicate, such as phyllosilicates or tectosilicates, preferably from the group of zeolites and bentonites.

8. The method as claimed in any of the preceding claims, **characterized in that** iron ions and/or aluminum ions, fluoride ions and/or lanthanum ions are additionally introduced and/or applied.

9. The method as claimed in any of the preceding claims, **characterized in that** the composition comprising at least one alkaline earth metal peroxide is introduced into the water, the sludge and/or the sediment and/or applied to the water, the sludge and/or the sediment directly, in solid form or as an aqueous slurry or solution, by hand or by suitable metering systems, and/or **characterized in that** the composition comprising at least one alkaline earth metal peroxide is present in solid form and the water to be treated flows around it.

10. The method as claimed in any of the preceding claims, **characterized in that** the composition comprising at least one alkaline earth metal peroxide is incorporated into the sediment and/or the sludge by positive mixers, rotary tillers or other mechanical metering systems and/or methods.

11. A kit comprising a composition comprising at least one alkaline earth metal peroxide, and cable bacteria.

12. The use of a composition comprising at least one alkaline earth metal peroxide in combination with cable bacteria for treatment of waters, sediments and/or sludges, especially sediments and/or sludges in water bodies.

13. The use of a composition comprising at least one alkaline earth metal peroxide in combination with cable bacteria for promotion of the development of aquatic plants or for waterbody restoration.

14. The use of a composition comprising at least one alkaline earth metal peroxide in combination with cable bacteria for sludge degradation and restoration of water reservoir capacity or for detoxification of a biocenosis in a sediment and/or in sludge.

15. The use of alkaline earth metal peroxide, especially calcium peroxide, or mixtures comprising alkaline earth metal peroxide, especially calcium peroxide, as a solid electron acceptor for temporary establishment of a sediment biocenosis including cable bacteria, for example as occurs in undisturbed waterbodies.

## Revendications

1. Procédé de traitement des eaux, des sédiments et/ou des boues, comprenant :
(a) introduction et/ou application d'une composition comprenant au moins un peroxyde alcalino-terreux dans et/ou sur les eaux, les sédiments et/ou les boues ; et
(b) introduction de bactéries câbles dans les eaux, les sédiments et/ou les boues.

2. Procédé de traitement des eaux, des sédiments et/ou des boues, comprenant :
(i) analyse des eaux, des sédiments et/ou des boues pour détecter la présence de bactéries câbles ; et
(ii-a) introduction et/ou application d'une composition comprenant au moins un peroxyde alcalino-terreux dans et/ou sur les eaux, sédiments et/ou boues, et
une introduction de bactéries câbles dans les eaux, les sédiments et/ou les boues si l'analyse des eaux, des sédiments et/ou des boues n'a pas révélé la présence de bactéries câbles ou n'en a révélé pratiquement aucune ; ou
(ii-b) introduction et/ou application d'une composition comprenant au moins un peroxyde alcalino-terreux dans et/ou sur les eaux, les sédiments et/ou les boues lorsque des bactéries câbles ont été trouvées lors de l'analyse des eaux, des sédiments et/ou des boues.

3. Procédé selon la revendication 1 ou 2, **caractérisé en ce que** l'on utilise comme peroxyde alcalino-terreux un peroxyde de calcium, de magnésium ou un mélange de ceux-ci.

4. Procédé selon l'une des revendications précédentes, **caractérisé en ce que** la composition comprenant au moins un peroxyde alcalino-terreux comprend en outre au moins un carbonate alcalino-terreux et/ou au moins un hydroxyde alcalino-terreux et/ou un sulfate alcalino-terreux.

5. Procédé selon l'une des revendications précédentes, **caractérisé en ce que** la composition comprenant au moins un peroxyde alcalino-terreux comprend en outre au moins un peroxyhydrate de carbonate alcalin, notamment Na₂CO₃ x H₂O₂, de préférence 2 Na₂CO₃ · 3 H₂O₂, ou un mélange de Na₂CO₃ et de H₂O₂, ou comprenant en outre une introduction et/ou une application d'au moins un peroxyhydrate de carbonate alcalin, en particulier Na₂CO₃ x H₂O₂, de préférence 2 Na₂CO₃ · 3 H₂O₂, ou un mélange de Na₂CO₃ et de H₂O₂.

6. Procédé selon l'une des revendications précédentes, **caractérisé en ce que** la composition comprenant au moins un peroxyde de métal alcalino-terreux est en outre utilisée avec un mélange de CaCO₃, CaCl₂ et/ou Ca(NO₃)₂ et éventuellement de sels de magnésium, ainsi que de NaHCO₃ et éventuellement de KHCO₃, CaCO₃ et CaCl₂ et/ou Ca(NO₃)₂ ainsi que, le cas échéant, des sels de magnésium étant présents dans un rapport molaire de 0,01 : 1 à 2 : 1 et CaCl₂ et/ou Ca(NO₃)₂ ainsi que, le cas échéant, des sels de magnésium et NaHCO₃ ainsi que, le cas échéant, KHCO₃ étant présents dans un rapport molaire de 1:3 à 2:1.

7. Procédé selon l'une des revendications précédentes, **caractérisé en ce que** la composition comprenant au moins un peroxyde alcalino-terreux comprend en plus au moins un silicate, tel que des phyllosilicates ou des tectosilicates, de préférence choisis dans le groupe des zéolithes et des bentonites.

8. Procédé selon l'une des revendications précédentes, **caractérisé en ce que** des ions fer et/ou aluminium, des ions fluorure et/ou des ions lanthane sont en outre introduits et/ou appliqués.

9. Procédé selon l'une des revendications précédentes, **caractérisé en ce que** la composition comprenant au moins un peroxyde alcalino-terreux est introduite directement, sous forme solide ou sous forme de suspension ou de solution aqueuse, manuellement ou par des systèmes de dosage appropriés dans l'eau, la boue et/ou le sédiment et/ou est appliquée sur l'eau, la boue et/ou le sédiment, et/ou **en ce que** la composition comprenant au moins un peroxyde alcalino-terreux se présente sous forme solide et l'eau à traiter circule autour de celle-ci.

10. Procédé selon l'une des revendications précédentes, **caractérisé en ce que** la composition comprenant au moins un peroxyde alcalino-terreux est incorporée dans le sédiment et/ou la boue par des mélangeurs à action forcées, des fraises à terre ou d'autres systèmes et/ou méthodes de dosage mécanique.

11. Kit comprenant une composition comprenant au moins un peroxyde alcalino-terreux, et des bactéries câbles.

12. Utilisation d'une composition comprenant au moins un peroxyde alcalino-terreux en association avec des bactéries câbles pour le traitement d'eaux, de sédiments et/ou de boues, en particulier de sédiments et/ou de boues dans des étendues d'eau.

13. Utilisation d'une composition comprenant au moins un peroxyde alcalino-terreux en association avec des bactéries câbles pour favoriser le développement de plantes aquatiques ou pour la thérapie aquatique.

14. Utilisation d'une composition comprenant au moins un peroxyde de métal alcalino-terreux en association avec des bactéries câbles pour la dégradation des boues et la restauration de la capacité de rétention d'eau ou pour la détoxification d'une biocénose dans un sédiment et/ou dans la boue.

15. Utilisation de peroxyde alcalino-terreux, en particulier de peroxyde de calcium, ou de mélanges comprenant du peroxyde alcalino-terreux, en particulier du peroxyde de calcium, en tant qu'accepteur d'électrons solide, pour la production temporaire d'une biocénose sédimentaire comprenant des bactéries câbles, par exemple telle qu'on la trouve dans des étendues d'eau non perturbées.
